# FASCICULE DE BREVET EUROPEEN

(11) **EP 3 492 316 B1**
(45) Date de publication et mention de la délivrance du brevet: **06.04.2022**
(21) Numéro de dépôt: 18207164.7
(22) Date de dépôt: 20.11.2018
(51) Int. Cl.: B60Q 1/04, B60Q 1/26, B60Q 1/30

(54) **DISPOSITIF DE SIGNALISATION ET D'ÉCLAIRAGE**
SIGNAL- UND BELEUCHTUNGSVORRICHTUNG
SIGNALLING AND LIGHTING DEVICE

(30) Priorité: 20.11.2017 FR 1760952
(43) Date de publication de la demande: 05.06.2019
(73) Titulaire: Lamberet, 01380 Saint-Cyr-sur-Menthon (FR)
(72) Inventeur: TUET, Gwénael, 01000 Bourg en Bresse (FR); MAYSSE, Jérôme, 90400 Andelnans (FR); BAUME, Hugues, 25460 Étupes (FR)
(74) Mandataire: Germain Maureau

(56) Documents cités:
- EP-A1- 2 243 662
- EP-A2- 0 818 354
- CH-A- 427 530
- DE-U1- 8 602 696
- GB-A- 803 995
- US-A- 4 658 335

## Description

L'invention concerne un dispositif d'éclairage disposé à l'arrière d'un véhicule routier de transport tel qu'un camion ou une remorque.

Les véhicules de transport de marchandises pour être conformes aux réglementations en vigueur en matière de transport routier sont équipés sur leur face arrière de dispositifs de signalisation qui regroupent des éléments lumineux à savoir des feux de stop, des feux indicateurs de changement de direction, des feux de recul, feux de brouillard, catadioptres ...

Ces dispositifs de signalisation s'avèrent être particulièrement exposés aux aléas de la circulation.

En particulier, les véhicules de transport de marchandises exposent leurs faces arrière de manière répétée. En effet, les camions ou les remorques sont accostés contre des quais de chargement/déchargement.

Au cours de ces opérations d'accostage, il peut arriver que les dispositifs de signalisation entrent en contact avec les quais.

Les dispositifs de signalisations sont, par nature, relativement fragile car ils comprennent de cabochons en matière plastique qui encapsulent des moyens lumineux généralement de types LED ou ampoules.

Il est, certes, connu de prévoir une liaison souple entre le véhicule et les dispositifs de signalisation

Le règlement n° 48 de la Commission Economique pour l'Europe des Nations Unies concernant les « Prescriptions uniformes relatives à l'homologation des véhicules en ce qui concerne l'installation des dispositifs d'éclairage et de signalisation lumineuse » permet qu'un dispositif de signalisation soit fixé sur un véhicule de manière mobile. Cela permet que le dispositif de signalisation qui est maintenu dans une position normale puisse s'écarter de cette position normale sous l'effet d'un contact avec un objet pour revenir à sa position normale lorsque le contact a cessé.

Le dispositif de signalisation doit retrouver sa position normale selon une répétitivité extrêmement stricte. Par ailleurs, l'éventuelle course du dispositif de signalisation entre sa position normale d'utilisation et une position autre que celle normale d'utilisation doit être strictement contrôlée.

On connait par le document par le document EP2243662 un dispositif de signalisation escamotable.

Dans ce contexte technique, un but de l'invention est de proposer un dispositif de signalisation et d'éclairage pour véhicules, en particulier de transport de marchandises sur route du type camion ou remorque, permettant de maintenir ledit dispositif dans sa position normale d'utilisation et permettant d'absorber des contacts de basse intensité.

L'invention concerne un dispositif de signalisation et d'éclairage comprenant un module de signalisation et d'éclairage et un élément de liaison comprenant
- un arbre central conçu pour être fixé sur un véhicule, une came étant reliée de manière fixe à l'arbre, ladite came présentant un profil d'extrémité présentant au moins un point proximal et au moins un point distal ;
- un carter cylindrique, mobile en rotation par rapport à l'arbre central, sur lequel est fixé le module d'éclairage et de liaison, un coulisseau étant relié de manière axialement glissante au carter, ledit coulisseau ayant un profil d'extrémité présentant un profil d'extrémité comprenant un point proximal et un point distal
- un élément élastique exerçant une poussée sur le coulisseau en vue de maintenir une position dite de fonctionnement normale du coulisseau par rapport à la came dans laquelle un point proximal de la came coïncide avec un point distal du coulisseau, l'élément élastique exerçant une action sur le coulisseau visant à ramener le coulisseau vers la position de fonctionnement normal lors d'une rotation du carter 6 par rapport à l'arbre central.
- le coulisseau présente une piste intérieure comprenant un point distal et diamétralement opposé un point proximal et, une piste extérieure comprenant un point distal et, diamétralement opposé un point proximal et ce que la came comprend un lobe intérieur présentant un point distal et un lobe extérieur présentant un point distal et un point proximal intérieur formé par une entaille intérieure et un point proximal extérieur formé par une entaille, les points proximaux et distaux du coulisseau venant respectivement en regard des points distaux et proximaux de la came, en position de fonctionnement normal du dispositif. Selon d'autres caractéristiques de l'invention prises isolement ou en combinaison :
- le coulisseau comprend sur sa surface extérieure au moins une cannelure et en ce que le carter comprend dans sa surface intérieure au moins une nervure dans laquelle coulisse la cannelure au nombre d'a moins une de coulisseau.
- le dispositif comprend un connecteur électrique inséré dans l'arbre central.
- le carter comprend deux ailes sur lesquels est fixé le module de signalisation et d'éclairage.
- le dispositif comprend, à chaque extrémité, un ensemble d'extrémité comprenant une bague de serrage, un palier à collerette, un circlips et une rondelle d'appui.

L'invention concerne également un véhicule comprenant un dispositif de signalisation et d'éclairage tel que précédemment défini.

Pour sa bonne compréhension, l'invention est décrite en référence aux figures ci annexées représentant à titre d'exemple non limitatif une forme de réalisation d'un dispositif de signalisation et d'éclairage 1 selon celle-ci.
La figure 1 montre un dispositif de signalisation et d'éclairage 1 selon l'invention fixé sur un véhicule ;
Les figures 2 et 3 montrent un élément de liaison 3 du dispositif de signalisation et d'éclairage 1 ;
La figure 4 est une vue éclatée de l'élément de liaison 3 ;
Les figures 5 à 7 montrent en perspective des organes constitutifs de l'élément de liaison 3, à savoir un coulisseau 10, une came 11 et un carter 6 ;

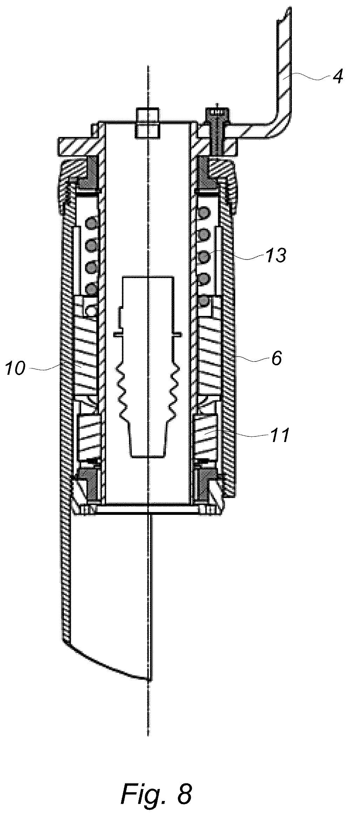

La figure 8 est une vue en coupe de l'élément de liaison 3 ;
Les figures 9 et 10 montrent le dispositif de signalisation et d'éclairage 1 dans sa position de fonctionnement normale ;
Les figures 11 et 12 montrent le dispositif de signalisation et d'éclairage 1 dans une position autre que sa position de fonctionnement normale.

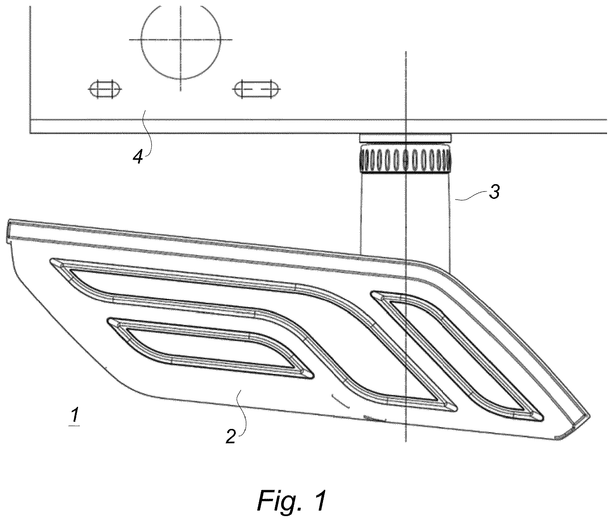

Comme on peut le voir sur la figure 1, le dispositif de signalisation et d'éclairage 1 comprend un module de signalisation et d'éclairage 2 et un élément de liaison 3 qui assure la fixation du module de signalisation et d'éclairage 2 sur un élément de structure d'un véhicule. Dans le cas présent, l'élément de liaison 3 est fixé à une barre transversale 4 d'un châssis d'un camion ou d'une remorque de transport. Cette barre transversale peut être la barre dite anti encastrement.

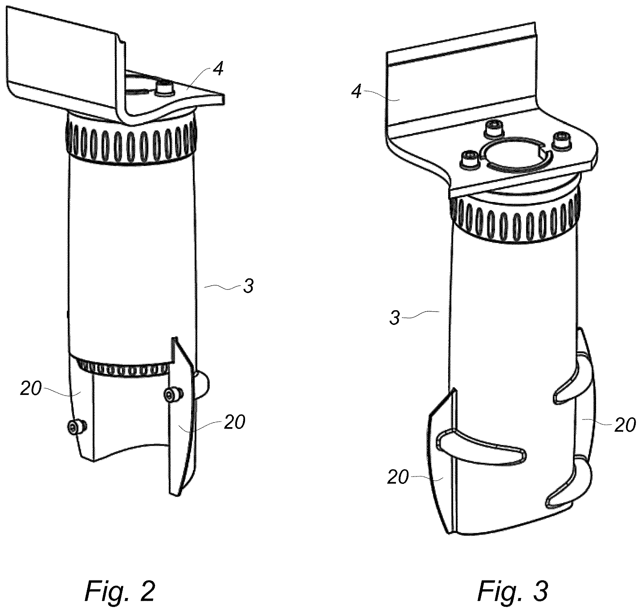

On peut se reporter aux figures 2 à 4 qui montrent plus particulièrement l'élément de liaison 3.

L'élément de liaison 3 présente une structure générale tubulaire dans laquelle plusieurs composants sont insérés dans un carter 6 cylindrique.

Ainsi, l'élément de liaison 3 comprend un arbre 7 central qui est doté d'une collerette 8 permettant sa fixation sur la barre 4 du véhicule par rapport auquel le carter 6 est mobile en rotation.

Les organes suivants sont engagés sur l'arbre 7 central qui est solidaire de la barre 4 et sont protégés par le carter 6 qui est, pour sa part, relié au module de signalisation et d'éclairage 2 :
- un coulisseau 10 cylindrique qui est mobile axialement dans le carter 6 ;
- une came 11 cylindrique contre laquelle le coulisseau 10 est maintenu en appui ;
- un élément élastique tel qu'un ressort 13 qui exerce son action de poussée sur le coulisseau 10 pour le maintenir contre la came 11.

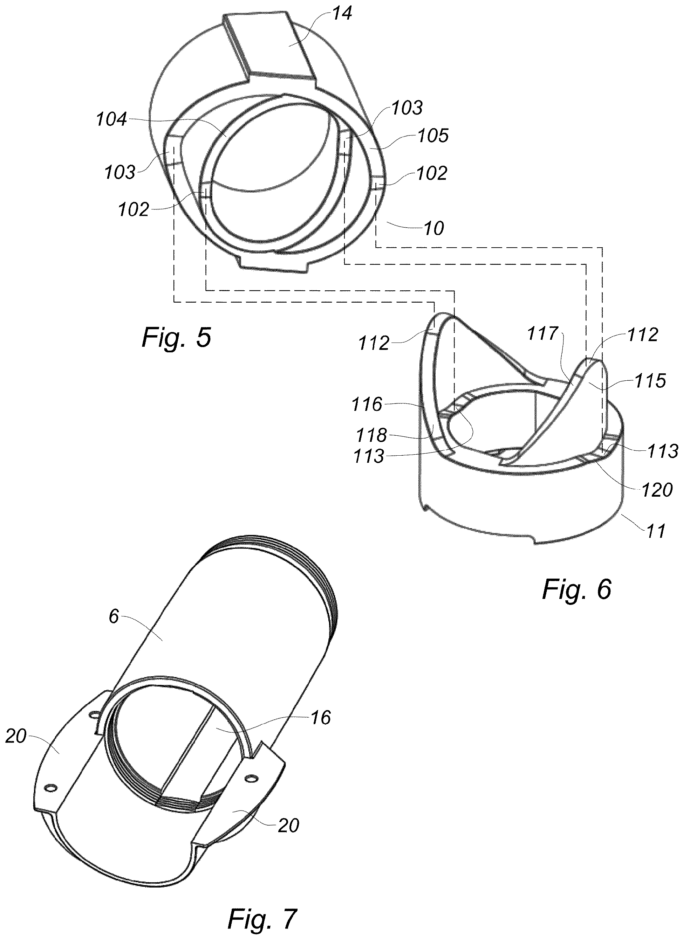

Comme on peut le voir sur la figure 5, le coulisseau 10 est une pièce tubulaire dont la surface extérieure est pourvue de cannelures 14 orientés selon les génératrices du coulisseau 10. Dans l'exemple illustré, les deux cannelures 14 sont disposées à 180° sachant que dans d'autres formes de réalisation de l'invention, il est possible de prévoir une à plusieurs cannelures.

La figure 7 fait apparaitre deux rainures 16 axiales ménagées dans la surface interne du carter 6, ces rainures 16 étant complémentaires des cannelures 14 qui dépassent de la surface extérieure du coulisseau 10.

A l'une de ses extrémités, le coulisseau 10 présente une arête qui est comprise dans un plan perpendiculaire à l'axe du coulisseau 10; à son autre extrémité, la came 11 comprend un profil évolutif présentant deux points proximaux 103 et deux points distaux 102.

Dans l'exemple illustré, le coulisseau 10, que l'on peut voir plus précisément à la Figure 5, est doté d'une piste intérieure 104 et d'une piste extérieure 105. Les pistes intérieure 104 et extérieure 105 sont concentriques et décalées radialement l'une de l'autre.

La piste intérieure 104 comprend un point distal 102 et diamétralement opposé un point proximal 103 tandis que la piste extérieure 105 comprend un point distal 102 et, diamétralement opposé un point proximal 103.

La piste intérieure 104 et la piste extérieure 105 sont définies par deux courbes qui respectivement relient leurs points distaux et proximaux, les pistes intérieure 104 et extérieure 105 ayant des profils identiques mais décalés de 180°.

La came 11, représentée à la Figure 6, contre laquelle le coulisseau 10 vient en appui, présente également une géométrie générale cylindrique dont le diamètre est identique à celui du coulisseau 10.

De façon similaire à la géométrie du coulisseau 10, la came 11 est dotée d'une piste intérieure 117 et d'une piste extérieure 118 définies par un lobe intérieur 115 et un lobe extérieur 116.

La piste intérieure 117 présente à l'extrémité du lobe intérieur 115 un point distal 112 et diamétralement opposé un point proximal 113 qui est défini par une entaille 120 pratiquée à l'extrémité de la came 11 à une côte radiale égale à la cote radiale où est positionné le lobe intérieur 116.

De façon similaire mais décalée de 180°, la piste extérieure 118 présente à l'extrémité du lobe extérieur 116 un point distal 112 et diamétralement opposé un point proximal 113 qui est défini par une entaille 120 pratiquée à l'extrémité de la came 11 à une côte radiale égale à la cote radiale où est positionné le lobe extérieur.

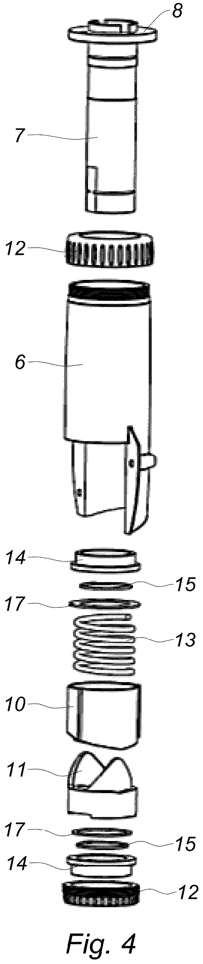

Comme le montre la figure 4, le coulisseau 10 et la came 11 sont engagés sur l'arbre 7. A chaque extrémité de l'élément de liaison 3, on trouve un ensemble d'extrémité comprenant une première et une seconde bagues de serrage 12, un premier et un second paliers à collerette 14, un premier et un second circlips 15 et une première et une seconde rondelles d'appui 17.

Le ressort 13 est interposé entre le coulisseau 10 et l'ensemble d'extrémité situé du côté de la collerette 8 de fixation de l'arbre 7 central.

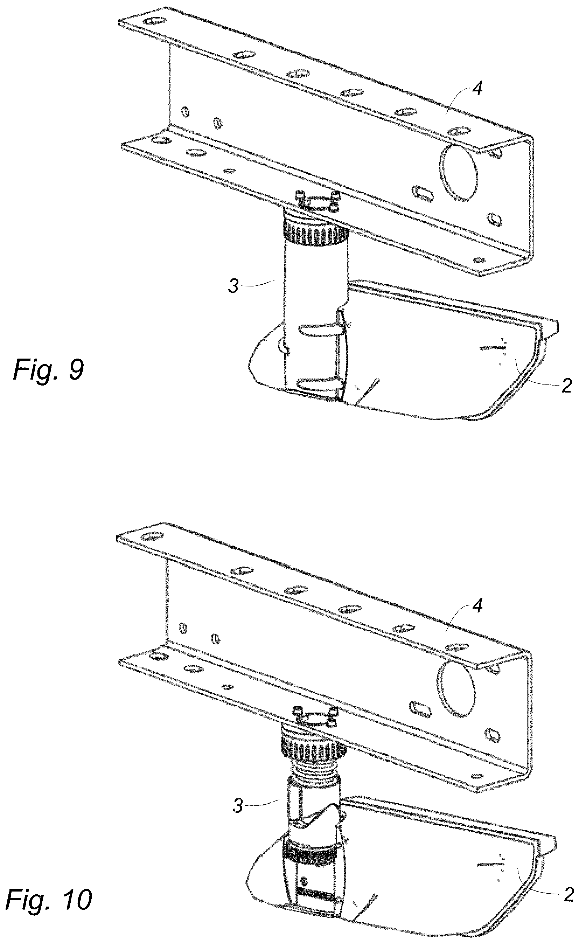

Le module de signalisation et d'éclairage 2 est relié à l'élément de liaison 3 grâce à deux ailes 20 qui permettent à l'élément de liaison 3 de recevoir le module de signalisation et d'éclairage 2. On peut voir sur la figure 9, le module de signalisation et d'éclairage 2 suspendu sur l'élément de liaison 3.

La figure 9 montre le dispositif dans sa position normale de fonctionnement. Dans cette position, le module d'éclairage et de signalisation 2 est compris dans le plan de barre 4 transversale.

Le maintien du dispositif de signalisation et d'éclairage 1 dans cette position est assuré par l'élément de liaison 3. Comme le montre la figure 10 sur laquelle l'élément de liaison 3 apparait dépourvu du carter 6, la position normale de fonctionnement est garantie par le fait que la came 11 et le coulisseau 10 sont alignés c'est-à-dire sont positionnés l'un par rapport à l'autre dans telle sorte que les points distaux de la came 11 sont engagés dans les points proximaux du coulisseau 10. Le dispositif d'éclairage et signalisation est stable dans cette position car les points distaux du coulisseau 10 sont insérés dans les entailles 120 dont la came 11 est pourvue. Le ressort 13 agit axialement pour maintenir l'élément de liaison 3 dans cette position.

Le module de signalisation et d'éclairage 2 est donc maintenu dans une position parfaitement stable.

En cas de contact du module de signalisation et d'éclairage 2 avec un objet présent dans la proximité immédiate du véhicule, celui-ci pivote.

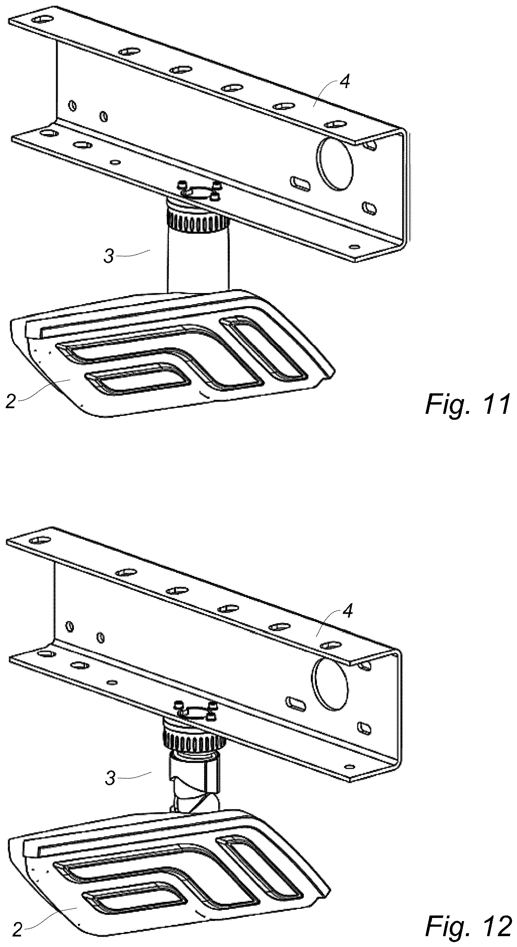

La rotation du module de signalisation et d'éclairage 2 est permise car le carter 6 auquel le module de signalisation et d'éclairage 2 est relié de manière fixe entre en rotation autour de l'arbre 7. Au cours de cette rotation, le coulisseau 10 suit les lobes de la came 11 qui est fixe par rapport à l'arbre 7 et, de ce fait, le coulisseau 10 est contraint dans un déplacement axial. Ce déplacement axial s'effectue contre l'action du ressort 13 et en comprimant celui-ci (voir figure 12).

Lorsque cesse le contact du module de signalisation et d'éclairage 2 avec l'objet qui a causé la rotation, le ressort 13 effectue une poussée sur le coulisseau 10 qui a pour effet de ramener les points distaux du coulisseau 10 vers les points proximaux de la came 11. De la sorte, l'élément de liaison 3 ramène le dispositif de signalisation et d'éclairage 1 dans sa position normale et stable d'utilisation.

Il est à noter que dans l'exemple de réalisation illustré sur les figures, le module de signalisation et d'éclairage 2 peut s'effacer d'un angle de +90° ou de -90° car les pistes du coulisseau 10 et les lobes de came 11 présentent des profils symétriques par rapport à leurs points distaux et proximaux respectifs.

En donnant aux lobes de la came 11 et aux pistes suiveuses du coulisseau 10 des profils évolutifs non symétrique, il est possible de définir des courses angulaires différentes.

L'invention fournit ainsi un dispositif de signalisation et d'éclairage 1 qui maintient de manière stable un module de signalisation et d'éclairage 2 dans sa position normale de fonctionnement tout effaçant des contacts de basse intensité avec des objets de la circulation et en assurant un retour vers la position de fonctionnement normal.

## Revendications

1. Dispositif de signalisation et d'éclairage (1) comprenant un module de signalisation et d'éclairage (2) et un élément de liaison (3) comprenant
- un arbre (7) central conçu pour être fixé sur un véhicule, une came (11) étant reliée de manière fixe à l'arbre (7), ladite came (11) présentant un profil d'extrémité présentant au moins un point proximal et au moins un point distal ;
- un carter (6) cylindrique, mobile en rotation par rapport à l'arbre (7) central, sur lequel est fixé le module de signalisation et d'éclairage (2), un coulisseau (10) étant relié de manière axialement glissante au carter (6), ledit coulisseau (10) ayant un profil d'extrémité présentant un profil d'extrémité comprenant un point proximal et un point distal
- un élément élastique exerçant une poussée sur le coulisseau (10) en vue de maintenir une position dite de fonctionnement normale du coulisseau (10) par rapport à la came (11) dans laquelle un point proximal de la came (11) coïncide avec un point distal du coulisseau (10), l'élément élastique exerçant une action sur le coulisseau (10) visant à ramener le coulisseau (10) vers la position de fonctionnement normal lors d'une rotation du carter (6) par rapport à l'arbre (7) central, , **caractérisé en ce que** le coulisseau (10) présente une piste intérieure comprenant un point distal et diamétralement opposé un point proximal et, une piste extérieure comprenant un point distal et, diamétralement opposé un point proximal et la came (11) comprend un lobe intérieur présentant un point distal et un lobe extérieur présentant un point distal et un point proximal intérieur formé par une entaille intérieure et un point proximal extérieur formé par une entaille, les points proximaux et distaux du coulisseau (10) venant respectivement en regard des points distaux et proximaux de la came (11), en position de fonctionnement normal du dispositif.

2. Dispositif de signalisation et d'éclairage (1) selon la revendication 1, **caractérisé en ce que** le coulisseau (10) comprend sur sa surface extérieure au moins une cannelure et **en ce que** le carter (6) comprend dans sa surface intérieure au moins une nervure dans laquelle coulisse la cannelure (12) au nombre d'au moins une du coulisseau 10.

3. Dispositif de signalisation et d'éclairage (1) selon l'une des revendications 1 à 2, **caractérisé en ce que** le dispositif comprend un connecteur électrique inséré dans l'arbre (7) central.

4. Dispositif de signalisation et d'éclairage (1) selon l'une des revendications 1 à 3, **caractérisé en ce que** le carter (6) comprend deux ailes sur lesquels est fixé le module de signalisation et d'éclairage (2).

5. Dispositif de signalisation et d'éclairage (1) selon l'une des revendications 1 à 4, **caractérisé en ce que** le dispositif comprend, à chaque extrémité, un ensemble d'extrémité comprenant une bague de serrage, un palier à collerette, un circlips et une rondelle d'appui.

6. Véhicule comprenant un dispositif de signalisation et d'éclairage (1) selon l'une de revendications 1 à 5.

## Patentansprüche

1. Signalisierungs- und Beleuchtungsvorrichtung (1), umfassend ein Signalisierungs- und Beleuchtungsmodul (2) und ein Verbindungselement (3), umfassend
- eine mittige Welle (7), die ausgelegt ist, um an einem Fahrzeug befestigt zu sein, eine Nocke (11), die fest mit der Welle (7) verbunden ist, wobei die Nocke (11) ein Endprofil aufweist, das mindestens einen proximalen Punkt und mindestens einen distalen Punkt aufweist;
- ein zylindrisches Gehäuse (6), das in Bezug zur mittigen Welle (7), an dem das Signalisierungs- und Beleuchtungsmodul (2) befestigt ist, drehbeweglich ist, wobei ein Schlitten (10) axial gleitend mit dem Gehäuse (6) verbunden ist, der Schlitten (10) ein Endprofil hat, das ein einen proximalen Punkt und einen distalen Punkt enthaltendes Endprofil aufweist,
- ein elastisches Element, das einen Schub auf den Schlitten (10) zum Beibehalten einer normalen Betriebsstellung des Schlittens (10) im Verhältnis zur Nocke (11) ausübt, in der ein proximaler Punkt der Nocke (11) mit einem distalen Punkt des Schlittens (10) zusammenfällt, wobei das elastische Element eine Aktion auf den Schlitten (10) ausübt, die darauf abzielt, den Schlitten (10) zu der normalen Betriebsstellung während einer Drehung des Gehäuses (6) im Verhältnis zu der mittigen Welle (7) zurückzuführen,
**dadurch gekennzeichnet, dass** der Schlitten (10) eine innere Schiene, die einen distalen Punkt und einen diametral gegenüberliegenden proximalen Punkt umfasst, und eine äußere Schiene aufweist, die einen distalen Punkt und einen diametral gegenüberliegenden proximalen Punkt umfasst, und die Nocke (11) einen inneren Vorsprung, der einen distalen Punkt aufweist, und einen äußeren Vorsprung umfasst, der einen distalen Punkt und einen inneren proximalen Punkt, der durch eine innere Kerbe gebildet wird, und einen äußeren proximalen Punkt, der durch eine Kerbe gebildet wird, aufweist, wobei die proximalen und distalen Punkte des Schlittens (10) jeweils in Hinsicht auf die distalen und proximalen Punkte der Nocke (11) in die normale Betriebsstellung der Vorrichtung gelangen.

2. Signalisierungs- und Beleuchtungsvorrichtung (1) nach Anspruch 1, **dadurch gekennzeichnet, dass** der Schlitten (10) an seiner Außenfläche mindestens eine Rille aufweist, und dadurch, dass das Gehäuse (6) in seiner Innenfläche mindestens eine Rippe aufweist, in der die mindestens eine Rille (12) des Schlittens (10) gleitet.

3. Signalisierungs- und Beleuchtungsvorrichtung (1) nach einem der Ansprüche 1 bis 2, **dadurch gekennzeichnet, dass** die Vorrichtung einen in die mittige Welle (7) eingeführten elektrischen Stecker umfasst.

4. Signalisierungs- und Beleuchtungsvorrichtung (1) nach einem der Ansprüche 1 bis 3, **dadurch gekennzeichnet, dass** das Gehäuse (6) zwei Flügel umfasst, auf denen das Signalisierungs- und Beleuchtungsmodul (2) befestigt ist.

5. Signalisierungs- und Beleuchtungsvorrichtung (1) nach einem der Ansprüche 1 bis 4, **dadurch gekennzeichnet, dass** die Vorrichtung an jedem Ende eine Endanordnung umfasst, die einen Spannring, ein Flanschlager, einen Sicherungsring und eine Stützscheibe umfasst.

6. Fahrzeug, umfassend eine Signalisierungs- und Beleuchtungsvorrichtung (1) nach einem der Ansprüche 1 bis 5.

## Claims

1. A signaling and lighting device (1) comprising a signaling and lighting module (2) and a connecting element (3) comprising
- a central shaft (7) designed to be fastened on a vehicle, a cam (11) being fixedly connected to the shaft (7), said cam (11) having an end profile having at least one proximal point and at least one distal point;
- a cylindrical casing (6), rotatably movable relative to the central shaft (7), on which the signaling and lighting module (2) is fastened, a slider (10) being axially slidingly connected to the casing (6), said slider (10) having an end profile having an end profile comprising a proximal point and a distal point
- an elastic element exerting a thrust on the slider (10) in order to maintain a so-called normal operating position of the slider (10) with respect to the cam (11) in which a proximal point of the cam (11) coincides with a distal point of the slider (10), the elastic element exerting an action on the slider (10) aimed at returning the slider (10) to the normal operating position upon a rotation of the casing (6) relative to the central shaft (7),
**characterized in that** the slider (10) has an internal track comprising a distal point and, diametrically opposite thereto, a proximal point and an external track comprising a distal point and, diametrically opposite thereto, a proximal point and the cam (11) comprises an internal lobe having a distal point and an external lobe having a distal point and an internal proximal point formed by an internal cutout and an external proximal point formed by a cutout, the proximal and distal points of the slider (10) respectively urged opposite the distal and proximal points of the cam (11), in the normal operating position of the device.

2. The signaling and lighting device (1) according to claim 1, **characterized in that** the slider (10) comprises on the external surface thereof at least one groove and **in that** the casing (6) comprises in the internal surface thereof at least one rib in which the at least one groove (12) of the slider 10 slides.

3. The signaling and lighting device (1) according to any of claims 1 and 2, **characterized in that** the device comprises an electrical connector inserted into the central shaft (7).

4. The signaling and lighting device (1) according to any of claims 1 to 3, **characterized in that** the casing (6) comprises two wings on which the signaling and lighting module (2) is fastened.

5. The signaling and lighting device (1) according to any of claims 1 to 4, **characterized in that** the device comprises, at each end, an end assembly comprising a clamping ring, a flanged bearing, a circlip and a support washer.

6. A vehicle comprising a signaling and lighting device (1) according to any of claims 1 to 5.
